# EUROPÄISCHE PATENTSCHRIFT

(11) **EP 2 010 002 B1**
(45) Veröffentlichungstag und Bekanntmachung des Hinweises auf die Patenterteilung: **23.09.2009**
(21) Anmeldenummer: 07724472.1
(22) Anmeldetag: 23.04.2007
(51) Int. Cl.: A23G 9/28

(54) **VORRICHTUNG ZUM AUSGEBEN VON SPEISEEIS**
DEVICE FOR DISPENSING ICE CREAM
DISPOSITIF DESTINÉ À DISTRIBUER DE LA CRÈME GLACÉE

(30) Priorität: 25.04.2006 DE 102006019626; 31.05.2006 DE 202006008741 U
(43) Veröffentlichungstag der Anmeldung: 07.01.2009
(73) Patentinhaber: Wagener Gastronomieproduktion Gmbh, 49751 Sögel (DE)
(72) Erfinder: WAGENER, Heinrich, 49751 Sögel (DE)
(74) Vertreter: Pott, Ulrich
(86) Internationale Anmeldenummer: PCT/EP2007/003542
(87) Internationale Veröffentlichungsnummer: WO 2007/121967

(56) Entgegenhaltungen:
- EP-A- 0 128 258
- DE-A1- 2 625 906
- DE-A1- 2 813 349
- DE-A1- 3 542 290
- DE-A1- 3 825 855
- DE-U- 7 418 128
- US-A- 5 820 892

## Beschreibung

Die Erfindung betrifft eine Vorrichtung zum Ausgeben von Speiseeis, insbesondere in Form von Spaghetti-Eis, gemäß dem Oberbegriff des Anspruchs 1.

Bei bekannten Vorrichtungen (DE 74 18 128 U1) zum Ausgeben von Speiseeis, insbesondere in Form von Spaghetti-Eis, wird ein topfförmiger Vorratsbehälter mit einer Eisportion befüllt und diese durch bodenseitige Öffnungen des Vorratsbehälters ausgepreßt, so daß das Eis nach Art von Spaghetti-Nudeln geformt wird. Diese Vorrichtung weist einen rohrförmigen Ständer auf, an dem einerseits der Vorratsbehälter und andererseits ein Handhebel gehalten sind, wobei mittels diesem ein Druckstück in den Vorratsbehälter einschwenkbar ist.

Gemäß DE 28 13 349, DE 22 14 023 und DE 26 25 906 sind Maschinen zur Verarbeitung von Speiseeis o. dgl. Lebensmitteln bekannt, wobei eine Kolbenpresse und ein als Düsenwerkzeug wirksamer Vorratsbehälter vorgesehen sind und aus diesem das Speiseeis, der Teig o. dgl, weitgehend automatisch ausgepreßt wird. DE 28 13 349 zeigt eine gattungsbildende Speiseeismaschine, bei der ein Preßkolben einer Kolbenpresse mit einer Antriebswelle versehen ist, die mittels einer offen im Gehäuseinnenraum liegenden Gewindeverbindung direkt an einen Antriebsmotor gekoppelt ist, so daß eine axiale Verschiebung des Preßkolbens möglich wird. Diese in koaxialer Ausführung großbauende Konstruktion ist durch eine Vielzahl von Einzelteilen wenig montage- bzw. demontagefreundlich, weist hohen Verschleiß auf und erfordert bei der Reinigung einen hohen Zeitaufwand. Im Anlagebereich des Vorratsbehälters am Gehäuse sind in dessen Innenraum führende Spaltbereiche durch offenliegende Kontaktelemente, Druckknöpfe u. dgl. Bauteile erforderlich, so daß hier eine hohe Verschmutzungsgefahr besteht und damit eine störanfällige und strengen Hygieneanforderungen nicht entsprechende Gestaltung vorliegt.

Bekannt sind auch Maschinen, bei denen zum Antrieb eines deren Ausgabevorgang steuernden Preßkolbens jeweilige Pneumatikzylinder verwendet werden. Diese Pneumatikzylinder erfordern einen entsprechenden Kompressor zur Drucklufterzeugung, wobei deren Transport über entsprechende den Platzbedarf erhöhende Förderleitungen erfolgt. Beim Betrieb derartiger Vorrichtungen wirkt der Kompressor insgesamt geräuschbelastend.

Die Erfindung befaßt sich mit dem Problem, eine Vorrichtung zum Ausgeben von Spaghetti-Eis zu schaffen, deren zu verminderten Geräuschbelastungen führender Preßkolbenantrieb in ein mit geringem technischen Aufwand herstellbares und kompaktes Gehäuseteil integrierbar ist und dabei das Gesamtkonzept der Vorrichtung bei geringem Raumbedarf einen weitgehend autarken Einsatz an unterschiedlichen Anwendungsorten sowie die Erfüllung hoher Anforderungen an die Hygienesicherheit ermöglicht.

Die Erfindung löst diese Aufgabe mit einer Vorrichtung mit den Merkmalen des Anspruchs 1. Hinsichtlich weiterer Ausgestaltungen wird auf die Ansprüche 2 bis 22 verwiesen.

Die Vorrichtung zum Ausgeben von Spaghetti-Eis ist in erfindungsgemäßer Ausführung als eine in sich geschlossene Baueinheit mit einem Edelstahlblech-Gehäuse konzipiert. Mit einem elektrisch betätigten Antrieb in Form eines Standard-Etektrozylinders ist ein besonders raumsparender und an den automatischen Preßvorgang optimal anpaßbarer Antrieb zur Verlagerung des Preßkolbens vorgesehen, wobei auch bei diesem Konzept nur ein Elektroanschluß erforderlich ist und das System von Preßluft o. dgl. Hilfsenergien unabhängig bleibt. Die wenigen Einzelteile können kompakt in einem weitgehend geschlossenen Gehäuseteil eingebaut werden, so daß diese Vorrichtung in Form einer Eispresse lediglich den Elektroanschluß erfordert und an weitgehend beliebigen Anwendungsorten auch mit einem batteriebetriebenen Elektrozylinder ein netzunabhängiges autarkes System bilden kann.

Der Vorrichtungsaufbau weist dabei eine als Hüllkontur geschlossene Blechkonstruktion als Gehäuse auf, so daß eine leicht transportable und mit den automatisch zusammenwirkenden Baugruppen eine einfache Handhabung ermöglichende Baueinheit bereitgestellt wird. Diese erfüllt auch hohe Anforderungen an die Hygienesicherheit, da die Edelstahlblech-Ausführung einen optimalen Verschmutzungsschutz gewährleistet und eine einfache Reinigung möglich ist. Die Vorrichtung weist eine optimale Kombination eines als Serienbauteil bereitstellbaren Elektrozylinders mit dem auf diesen konstruktiv abgestimmten Edelstahl-Blech-Gehäuse auf, dessen Umfangskontur durch die in den Innenraum integrierten Steuerbaugruppen eine weitgehend spaltfreie Hülle bildet, die mit der einstückigen Wandung im Bereich des Stützfußes überaus kompakt ist. Durch weitgehende Spaltfreiheit im Funktionsbereich der beweglichen Bauteile ist das System insgesamt verschmutzungsresistent und weist einen hohen Hygienestandard auf.

Die jeweiligen Baugruppen der Vorrichtung im Bereich des Stellantriebes, des mit dem Elektrozylinder verlagerbaren Preßkolbens und des Aufnahmeteils für den Vorratsbehälter sind so ausgebildet, daß zu Reinigungszwecken eine einfache Demontage möglich ist. Insbesondere ist der Preßkolben mit geringem Aufwand vom Antriebszylinder lösbar, so daß auch von weniger geübten Hilfskräften eine einfache Säuberung und den Hygieneanforderungen entsprechende Handhabung der Vorrichtung möglich ist. In das aus Edelstahlblech gefertigte Gehäuseteil sind sämtliche Bauteile integriert und am einstückig mit dem Gehäuse geformten Bodenteil ist eine zusätzliche Tropfschale so angeformt, daß die Vorrichtung optimal auf einer Unterlage abstützbar ist und dabei ein ungewollter Austritt von Speiseeisresten vermieden wird.

Im Funktionsbereich des Preßkolbens sind die Teile durch Schraubverbindungen im Bereich zwischen einer Tragplatte und dem oberen Ende des Aufnahmeteils verbunden. Ebenso ist vorgesehen, diese demontierbaren und leicht zu reinigenden Teile durch einen Verbinder nach Art eines Bajonett-Verschlusses zu fixieren. Damit ist eine besonders einfache und schnell bedienbare Halterung erreicht und die demontierten Edelstahl-Teile können effizient einer Maschinenreinigung zugeführt werden.

Mit dem als kompakte Einheit in Form eines Standard-Elektrozylinders ausgebildeten Arbeitszylinder des Preßkolbens ist die Bedienung der Baueinheit insgesamt einfacher einstellbar und regelbar, wobei neben der automatischen Vorgabe sowie Erfassung jeweiliger Bedienstellungen im Bereich des Elektrozylinders auch die jeweiligen Hubgeschwindigkeiten des Preßkolbens stufenlos einstellbar sind.

Weitere Einzelheiten und vorteilhafte Ausgestaltungen der Erfindung ergeben sich aus der nachfolgenden Beschreibung und der Zeichnung, in der ein Ausführungsbeispiel der erfindungsgemäßen Vorrichtung veranschaulicht ist. In der Zeichnung zeigen:
- Fig. 1: eine Seitenansicht einer ersten Ausführung der Vorrichtung mit zur Darstellung der inneren Bauteile entfernter Seitenwandung,
- Fig. 2: eine Vorderansicht der Vorrichtung gemäß Fig. 1,
- Fig. 3: eine Draufsicht der Vorrichtung gemäß Fig. 2,
- Fig. 4: eine Seitenansicht ähnlich Fig. 1 mit einer zweiten Ausführung der Vorrichtung mit konstruktiv geändertem Aufnahmeteil,
- Fig. 5: eine vergrößerte Ausschnittsdarstellung im Verbindungsbereich eines einen Vorratsbehälter aufnehmenden Aufnahmeteils unterhalb eines Preßkolbens,
- Fig. 6: eine Einzeldarstellung des Aufnahmeteils mit dem Verbinder nach Art eines Bajonett-Verschlusses an einer Tragplatte des Gehäuseteils,
- Fig. 7: eine Einzeldarstellung des Aufnahmeteils mit oberseitigem Profilansatz,
- Fig. 8: eine Draufsicht des Aufnahmeteils gemäß Fig. 7,
- Fig. 9: eine Einzeldarstellung der Tragplatte gemäß einer Linie VI-VI in Fig. 10, und
- Fig. 10: eine Draufsicht der Tragplatte gemäß Fig. 9.

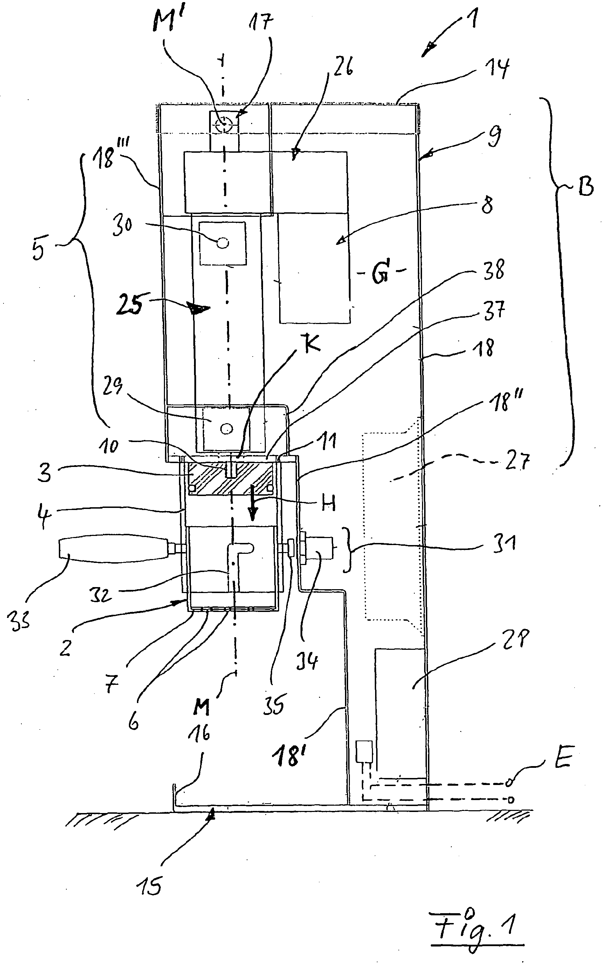

In Fig. 1 ist eine insgesamt mit 1 bezeichnete Vorrichtung zum Ausgeben von Speiseeis dargestellt. Derartige Vorrichtungen 1 sind (ähnlich DE 28 13 349) mit einem topfförmigen Vorratsbehälter 2 zu bestücken, in dem eine nicht näher dargestellte Eisportion eingefüllt ist. In der dargestellten Bedienstellung wird der Vorratsbehälter 2 im Nahbereich eines verlagerbaren Preßkolbens 3 abgestützt. Danach wird der einen Stellantrieb 5 aufweisende Preßkolben 3 in einer Hubrichtung gemäß Pfeil H verlagert, dabei das im Vorratsbehälter 2 befindliche Speiseeis durch jeweilige Öffnungen 6 im Behälterboden 7 gepreßt und danach kann das Speiseeis in Form von Spaghetti-Eis in einem nicht dargestellten Servierbehälter aufgenommen werden.

Die Vorrichtung 1 ist erfindungsgemäß als eine Baueinheit B ausgebildet, die im Bereich des Preßkolbens 3 einen mit einem Elektrozylinder 25 (Fig. 1) versehenen Stellantrieb 5 aufweist. Diese nur einen Elektroanschluß E erfordernde Baueinheit B weist ein verbessertes und im wesentlichen geschlossenes Gehäuseteil 9 auf, in das sämtliche der Bauteile optimal integriert sind. Damit ist die Baueinheit B an weitgehend beliebigen Anwendungsorten mit lediglich einem Elektroanschluß E betreibbar und zusätzliche Kompressoren mit Steuerleitungen u. dgl. Zusatzteilen außerhalb des Gehäuses 9 sind entbehrlich.

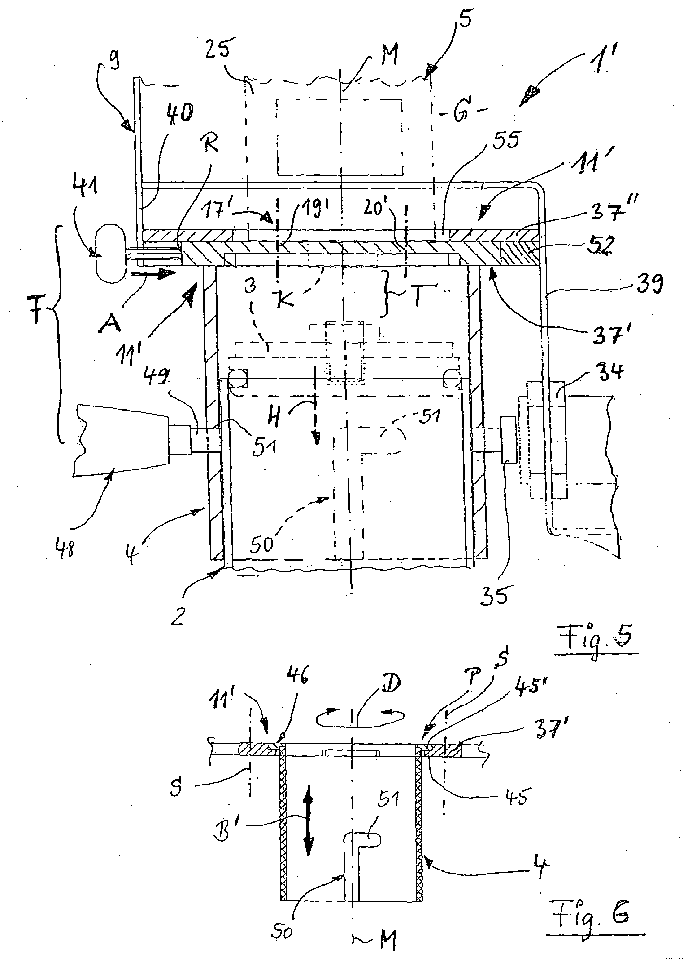

Durch eine Kombination des aus Edelstahlblech bestehenden Gehäuseteils 9 mit dem als Standardbaugruppe einsetzbaren Elektrozylinder 25 wird die Baueinheit B sowohl den Forderungen nach niedrigen Gestehungskosten als auch steigenden Hygieneanforderungen gerecht. Der Standard-Elektrozylinder 25 weist in geschlossener Bauform einen Elektromotor 8, ein Getriebe 26 und einen mit dem Preßkolben 3 verbindbaren Hubteil K auf, wobei diese Baugruppe durch umgebende Wandungen (Fig. 5) zum Innenraum G des Gehäuses 9 hin keine Verbindung aufweist.

Das Konzept der kompakten Baueinheit B ist darauf abgestellt, daß im Bereich des Stellantriebes 5, des verlagerbaren Preßkolbens 3 und eines den Vorratsbehälter 2 beim Pressen des Eises abstützenden Aufnahmeteils 4 jeweilige lösbare Verbindungen als Halterung vorgesehen sind. Damit ist im Bedarfsfall eine schnelle Demontage funktionswesentlicher Teile möglich und diese können einfach gesäubert werden. Im Bereich von Preßkolben 3 und Hubteil K ist diese lösbare Verbindung insbesondere durch eine Schraubverbindung 10 erreicht. Auch der Aufnahmeteil 4 kann durch eine Schraubverbindung 11 mit dem Gehäuse 9 so verbunden werden, daß eine einfache Trennung in diesem Funktionsbereich möglich ist, gleichwohl ein ungewolltes Eintreten von Speiseeis o. dgl. in den Gehäuseinnenraum G verhindert ist.

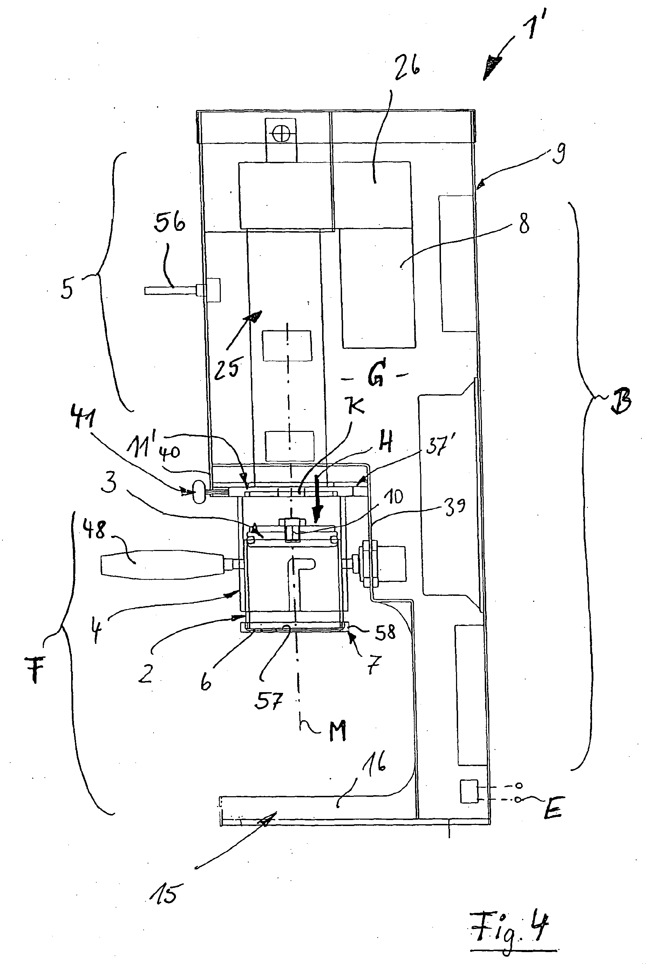

Es versteht sich, daß in zweckmäßiger Ausführung diese zur Verarbeitung von Lebensmitteln vorgesehene Vorrichtung 1 im Bereich des Gehäuses 9 jeweilige aus Edelstahlblech gefertigte seitliche Wandteile 12, 13, einen entsprechenden Deckelteil 14 sowie einen Bodenteil 15 aufweist. Diese Edelstahlteile bilden eine insgesamt kompakte Einheit, wobei denkbar ist, durch mehrmalige Abkantungen eines Blechhalbzeuges im wesentlichen einstückige Wandungsteile hoher Eigenstabilität zu bilden. Gleichzeitig ist diese materialsparende Konstruktion so ausgelegt, daß durch die Halterung der Wandteile zueinander, die Einbaulage des Stellantriebes 5 (Fig. 1, Fig. 4) und/oder Zwischenwände 37", 39 (Fig. 5) die gesamte Baueinheit B stabil ist.

Das Bodenteil 15 ist in Form einer Tropfschale 16 (Fig. 4) so ausgebildet, daß die in Gebrauchsstellung über dieser Tropfschale 16 befindlichen Bauteile für die Pressung des Spaghetti-Eises vollständig untergriffen sind und damit ein ungewollter Austritt von Speiseeisresten an die Umgebung verhindert wird.

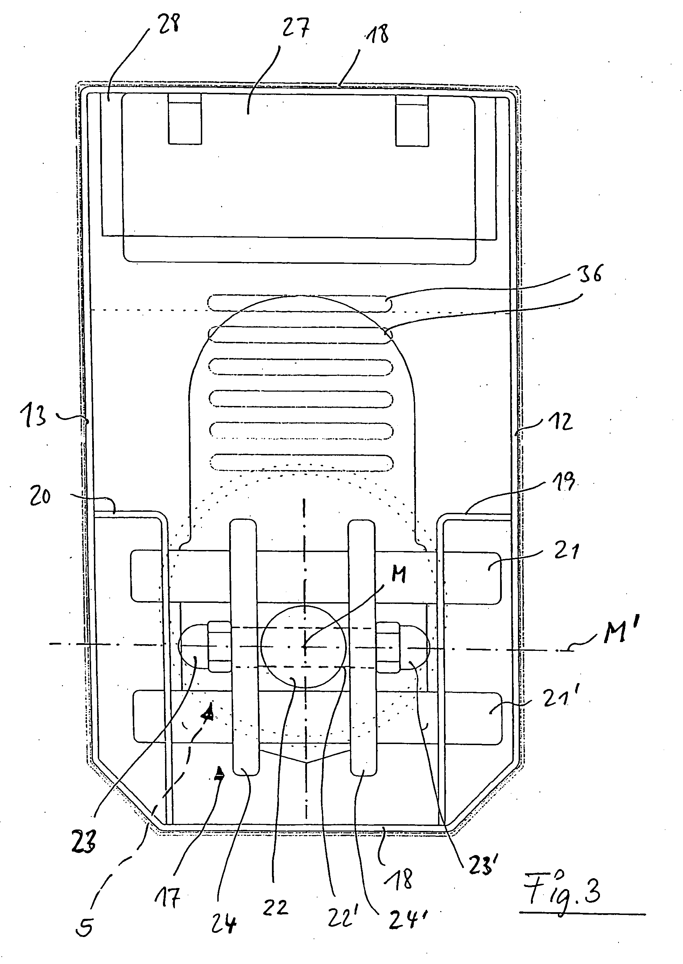

Zur Festlegung des Preßkolbens 3 bzw. der Stellantrieb-Baugruppe 5 am Gehäuse 9 ist am Deckelteil 14 eine Halterung 17 (Fig. 3) vorgesehen, die an den Wandungsteilen 12, 13 und einer Rückwand 18 gehaltene Stützschenkel 19, 20 aufweist. Zwischen diesen Stützschenkeln 19, 20 erstrecken sich vorzugsweise zwei Querträger 21, 21', an denen der eine vertikale Hochachse M definierende Stellantrieb 5 festgelegt ist. Dargestellt ist ein Tragauge 22 für den als Antriebszylinder vorgesehenen Elektrozylinder 25, der an einem Haltebolzen 22' gehalten ist. Dieser weist seinerseits jeweilige endseitige Spannschrauben 23, 23' zur Halterung an jeweiligen Längsstegen 24, 24' auf. Damit ist erreichbar, daß der Stellantrieb 5 im Bereich der Querachse M' auch pendelnd aufhängbar ist.

In einer zweiten Ausführung der Halterung 17' (Fig. 5) ist vorgesehen, daß der Elektrozylinder 25 durch jeweilige Verbindungsschrauben 19', 20' o. dgl. Elemente mit der Tragplatte 37' verbunden ist. Damit kann eine lösbare Fixierung erreicht werden, wobei die obere Halterung 17 (Fig. 1) entbehrlich sein kann.

Die Zusammenschau von Fig. 1 und 3 verdeutlicht, daß in das auch in Bereichen 18', 18" einer Vorderwand-Platte weitgehend geschlossene Gehäuseteil 9 sowohl der mit dem Elektromotor 8 verbundene Elektrozylinder 25 des Preßkolbens 3 als auch ein den Elektromotor 8 mit dem Elektrozylinder 25 verbindendes Getriebeteil 26 und ein Steuertrafo 27 sowie ein Lüfter 28 integriert sind. Bei optimaler Größe des als Hüllform wirksamen Gehäuseteils 9 ist damit eine kompakte Einheit geschaffen. Im Bereich des Preßkolbens 3 ist zwischen den Teilen 18" und 18''' der Vorderwand zusätzlich eine horizontale Tragplatte 37 vorgesehen, die den Elektrozylinder 25 durch ein Stabilisierungsblech 38 aufnimmt und damit diesen Bereich zusätzlich abdeckt.

Für eine weitgehend automatische Handhabung dieser Baueinheit B weist der Preßkolben 3 im Bereich des Elektrozylinders 25 jeweilige zur Steuerung des Hubweges (Pfeil H) vorgesehene Endlagensensoren 29 und 30 auf, die serienmäßig an dieser Baugruppe angebaut sind. Diese als an sich bekannte Serien-Bauteile bereitstellbaren Elemente des Stellantriebes 5 können bei der erfindungsgemäßen Vorrichtung 1 optimal in das Edelstahl-Gehäuse 9 integriert werden, so daß bei geringem Raumbedarf eine besonders geräuscharme Funktion der Baueinheit B erreicht wird. An Stelle der Endlagensensoren ist auch ein Wegmeßsystem o. dgl. Positionskennung denkbar.

Im Bereich des den Vorratsbehälter 2 umfassenden Aufnahmeteils 4 ist ein zusätzlicher Signalgeber 31 vorgesehen, der in zweckmäßiger Ausführung mit dem Stellantrieb 5 bzw. dem Elektromotor 8 des Preßkolbens 3 zusammenwirkt. Während einer Positionierung des Vorratsbehälters 2 durch eine Bedienperson, die den Vorratsbehälter entsprechend einer an sich bekannten Aufnahmenut 32 mittels eines Handhebels 33 in eine Raststellung am Aufnahmeteil 4 verlagert, wird auch der Signalgeber 31 betätigt. Danach erfolgt die Absenkbewegung gemäß Pfeil H automatisch, wobei der Preßkolben 3 entsprechend den Endlagensensoren 29 und 30 gesteuert und aus einer oberen Lage abgesenkt bzw. in diese zurückbewegt wird.

In vorteilhafter Ausführung ist als Signalgeber im Bereich des Aufnahmeteils 4 ein Näherungsschalter 34 vorgesehen, der mit dem Haltestift 35 des Vorratsbehälters 2 aktiviert wird. Insbesondere erfolgt eine berührungslose Aktivierung des Schalters 34. Dieser ist so im Wandbereich 18" positioniert, daß eine weitgehend spaltfreie Oberfläche zum vorgelagerten Funktionsbereich hin besteht.

Mit dem erfindungsgemäßen Antrieb über den Elektro-Hubzylinder 25 kann der Preßkolben 3 mit weitgehend variablen Preßgeschwindigkeiten bewegt werden, da im Bereich des Elektromotors 8 bzw. des Getriebes 26 eine schnelle Anpassung an unterschiedliche Geschwindigkeiten möglich ist. Insbesondere ist die Bewegung des Preßkolbens 3 auch stufenlos regelbar.

Das eine geschlossene Baueinheit bildende Gehäuseteil 9 ist im Bereich zumindest einer ihrer Wandungen mit jeweiligen Lüftungsöffnungen 36 (Fig. 3) versehen, wobei diese Öffnungen auch im Bereich der Rückwand 18 bzw. der Seitenwände 12 oder 13 vorgesehen sein können.

Die erfindungsgemäße Baueinheit B ist mit ihrem raumsparenden und leichtbauenden Konzept einfach transportabel, wobei mit den durch Abkantung des Edelstahlbleches geformten Wandteilen 12, 13, 14, 15, 18 ein weitgehend einstückiger Gehäuseteil 9 gebildet werden kann, der auch eine optisch ansprechende Gestaltung aufweist.

In Fig. 4 ist eine insgesamt mit 1' bezeichnete Vorrichtung zum Ausgeben von Speiseeis in einer zweiten Ausführung dargestellt. Auch das Konzept der kompakten Baueinheit B gemäß Fig. 4 ist darauf abgestellt, daß im Bereich des Stellantriebes 5, des verlagerbaren Preßkolbens 3 und des den Vorratsbehälter 2 beim Pressen des Eises abstützenden Aufnahmeteils 4 jeweilige lösbare Verbindungen als Halterung vorgesehen sind.

Der Stellantrieb 5 kann im Bereich seines mit dem Getriebe 26 und dem Motor 8 verbundenen Elektrozylinders 25 vorteilhaft mit einer nicht näher dargestellten Kugel-Rollen-Spindel als das Hubteil K versehen sein. An deren Stelle ist auch ein pneumatischer oder hydraulischer Antrieb denkbar. Im Bereich eines Steuerteils 56 ist eine Bedienung des Stellantriebs 5 möglich, womit durch entsprechende Geschwindigkeits-Einstellungen der Preßbewegung des Kolbens 3 (Pfeil H) eine Anpassung an variierende Konsistenzen des im Vorratsbehälter 2 befindlichen Eises erreicht wird.

In Fig. 5 bis 10 zeigen jeweilige vergrößerte Darstellungen einen speziellen Aufbau der Bauteil-Verbindung 11', wobei diese prinzipiell als Schraub- und/oder Klemmverbindung vorgesehen sein kann. Neben einer direkten Verbindung des Aufnahmeteils 4 mit dem Gehäuseteil 9 durch ein Gewinde ist denkbar, das Aufnahmeteil 4 im Bereich einer Tragplatte 37' - die ihrerseits zwischen zwei Wandteilen 39, 40 des Gehäuses 9 gehalten ist - durch eine nicht näher dargestellte Steckverbindung aufzunehmen. Mittels einer quer zur Längsmittelebene M wirkenden Schraube 41 o. dgl. Klemmteil(e) (Pfeil A, Fig. 5) ist eine Fixierung möglich. Der obere Randbereich des Aufnahmeteils 4 kann dabei mittels der Klemmschraube 41 bei R erfaßt und in Spannrichtung A gegen ein im Bereich des Wandteils 39 befindliches Anlageelement 52 gedrückt werden.

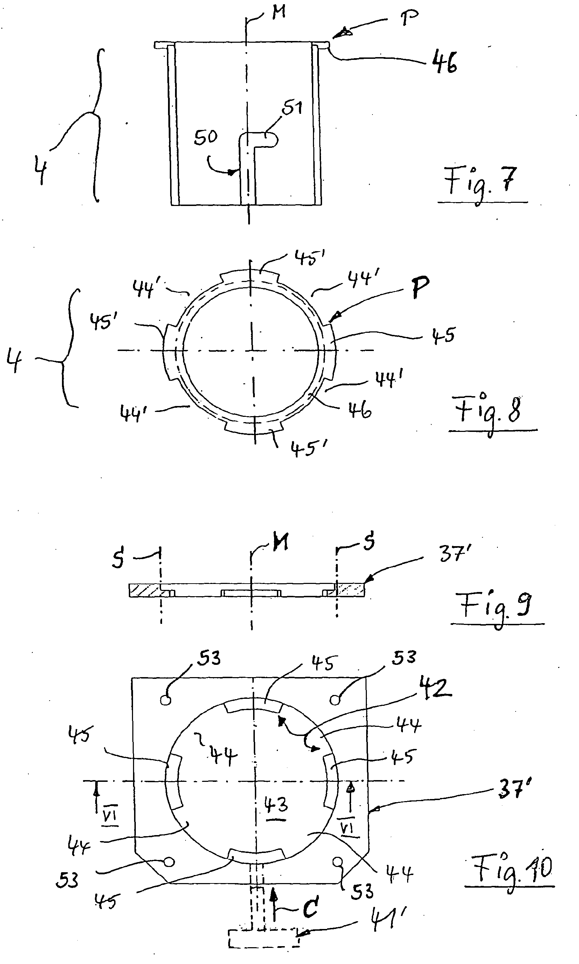

Die Detaildarstellungen gemäß Fig. 6 bis 10 verdeutlichen, daß das Aufnahmeteil 4 am in Einbaulage oberen Ende einen Profilansatz P (Fig. 6) aufweist, der mit einem gehäuseseitigen bzw. im Bereich der Tragplatte 37' vorgesehenen Gegenprofil 42 (Fig. 10) verbindbar ist.

In zweckmäßiger Ausführung ist diese in Fig. 6 dargestellte Profil-Verbindung nach Art eines Bajonett-Verschlusses ausgebildet, so daß das Aufnahmeteil 4 in einer vertikalen Verbindungsrichtung (Pfeil B', Fig. 6) in die komplementär profilierte Durchlaßöffnung 43 der Tragplatte 37' verlagerbar und durch eine entsprechende Schwenkbewegung (Pfeil D, Fig. 6) im Bereich von Profilansatz P und Gegenprofil 42 ver- bzw. entriegelbar ist.

In zweckmäßiger Ausführung ist das Aufnahmeteil 4 mit einem den Profilansatz P aufweisenden Ringteil 46 (Fig. 8) versehen, das oberseitig mit dem Aufnahmeteil 4 verschweißt ist. Das Gegenprofil 42 ist in der als eine Aufnahmeplatte wirksamen Tragplatte 37' bzw. im Randbereich deren Öffnung 43 so geformt, daß vier Aufnahmeöffnungen 44 bzw. Ansatzteile 45 vorgesehen sind. Diese nach Art eines Bajonett-Verschlusses wirksame Profilierung ist mit den entsprechenden Profilen 44' und 45' des Aufnahmeteils 4 (Fig. 8) verrastbar und insbesondere zu Reinigungszwecken einfach entriegelbar.

Als Sicherung kann zwischen der Tragplatte 37' und dem Profilansatz P des Aufnahmeteils 4 eine zusätzliche Klemmschraube 41' (Fig. 10) vorgesehen sein, deren Drehbewegung eine Klemmwirkung in Pfeilrichtung C bewirkt (ähnlich der Klemmschraube 41 in Fig. 4) und damit das Aufnahmeteil 4 an der Tragplatte 37' fixiert.

Im Bereich der Verbindung 11' (Fig. 5) ist eine zusätzliche Stützplatte 37" vorgesehen sein, so daß dieser beim Bedienen der Vorrichtung 1' belastete Teilbereich zusätzlich ausgesteift ist. Die Stützplatte 37" erstreckt sich dabei zwischen den Wandteilen 39 und 40 des Gehäuses 9 und weist eine unterhalb des Stellantriebs 5 vorgesehene Durchlaßöffnung 55 auf, die mit einer nicht näher dargestellten Dichtung so verschlossen ist, daß der Innenraum G des Gehäuses 9 vom funktionalen Eis-Füllbereich F getrennt ist und ungewollte Verschmutzungen des System-Innenraums vermieden sind.

Die am Gehäuse 9 gehaltene Stützplatte 37" ist vorteilhaft so dimensioniert, daß an dieser die Stützplatte 37' mittels deren Halteöffnungen 53 (Fig. 10) durchgreifender Schrauben (nicht dargestellt) o. dgl. Verbindungsmittel im Bereich S (Fig. 6) festlegbar ist.

Der Vorratsbehälter 2 (Fig. 4) weist einen Handgriff 48 auf, dessen Tragarm 49 in eine im Aufnahmeteil 4 vorgesehene Aufnahmenut 50 vertikal einführbar und zu einem quer verlaufenden Nutschenkel 51 hin radial verlagerbar ist. In dieser Position ist beim Pressen von Eis (Preßkolbenbewegung gemäß Pfeil H, Fig. 4) eine stabile Verbindung von Vorratsbehälter 2 und Aufnahmeteil 4 erreicht und die berührungslose Kontaktgabe zwischen Haltestift 35 und Näherungsschalter 34 gewährleistet (Fig. 5).

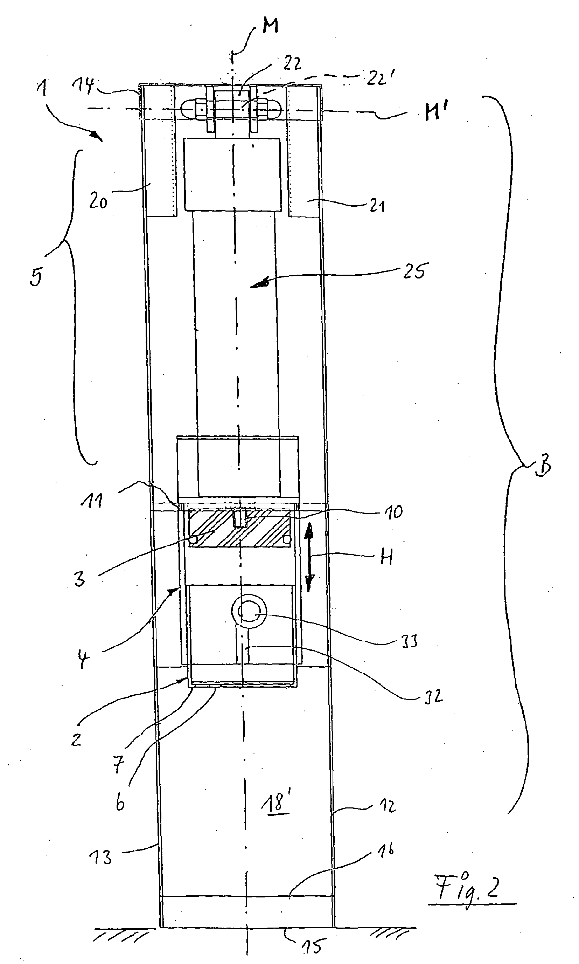

Die vorbeschriebene Vorrichtung 1' ist so konzipiert, daß durch eine einfache Demontage eine komplette Trennung der Eis-Ausgabeteile von der als Basisstation bereitgestellten Bedienbaugruppe 13 (Fig. 2) möglich ist. Damit können die von den Bedingungen der Lebensmittelhygiene vorgesehenen Anforderungen sicher erfüllt werden. Zu Reinigungszwecken kann das Aufnahmeteil 4 im Verbindungsbereich bei 11' vom Gehäuse 9 getrennt werden, der Preßkolben 3 ist im Bereich T (Fig. 5) vom Stellantrieb 5 lösbar und die bodenseitige Tropfschale 16 kann ebenfalls einfach gesäubert werden.

Der das Eis aufnehmende Vorratsbehälter 2 (Fig. 4) weist im Bereich seines Behälterbodens 7 ebenfalls lösbare Verbindungen auf, wobei ein der gewünschten Eis-Formung anpaßbares Einlegeblech 57 (mit den Öffnungen 6) durch einen Schraubring 58 so gehalten ist, daß auch hier eine schnelle Demontage und Reinigung möglich ist. Sämtliche Einzelteile können einer Spülmaschine o. dgl. zugeführt werden und nach der Reinigung ist eine einfache Montage der Baueinheit B im Ausgabebereich F möglich.

## Patentansprüche

1. Vorrichtung zum Ausgeben von Speiseeis, insbesondere in Form von Spaghetti-Eis, die mit einem in einem topfförmigen Vorratsbehälter (2) verlagerbaren Preßkolben (3) versehen ist, derart, daß mit dem einen elektromotorischen Stellantrieb (5) aufweisenden Preßkolben (3) das in dem am Gehäuseteil (9) gehaltenen Vorratsbehälter (2) befindliche Speiseeis durch jeweilige Öffnungen (6) im Behälterboden (7) auspreßbar und einem unter diesem befindlichen Servierbehälter übergebbar ist, **dadurch gekennzeichnet, daß** als Stellantrieb (5) eine Standardbaugruppe in Form eines einen Elektromotor (8), einen Getriebeteil (26) und einen mit dem Preßkolben (3) verbindbaren Hubteil (K) aufweisenden Elektrozylinders (25) vorgesehen ist und dieser in einem nur Edelstahlbleche als Wandungsteile (12, 13, 18) aufweisenden Gehäuseteil (9) abgestützt ist, derart, daß dessen außenliegender Funktionsbereich (F) zumindest nahe dem Preßkolben (3) weitgehend spaltfrei geformt und damit eine hygienesichere Baueinheit (B) gebildet ist.

2. Vorrichtung nach Anspruch 1, **dadurch gekennzeichnet, daß** die Baueinheit (B) zumindest im Bereich des Stellantriebes (5), des verlagerbaren Preßkolbens (3), des Vorratsbehälters (2) und eines diesen beim Pressen des Eises abstützenden Aufnahmeteils (4) eine jeweilige demontierbare Baugruppe bildet.

3. Vorrichtung nach Anspruch 1 oder 2, **dadurch gekennzeichnet, daß** die Funktions- und Stützteile der Baueinheit (B) so in die Wandteile (12, 13, 18, 18') integriert sind, daß eine weitgehend geschlossene und in sich stabile Hüllkontur gebildet ist.

4. Vorrichtung nach einem der Ansprüche 1 bis 3, **dadurch gekennzeichnet, daß** das Gehäuseteil (9) der Baueinheit (B) einen diese auf einer Unterlage abstützenden Bodenteil (15) in Form einer Tropfschale (16) aus Edelstahlblech aufweist.

5. Vorrichtung nach einem der Ansprüche 1 bis 4, **dadurch gekennzeichnet, daß** der Stellantrieb (5) mit dem Elektrozylinder (25) einerseits an einem oberen Deckelteil (14) des Gehäuses (9) gehalten und andererseits ein die Wandung (37) durchgreifender Hubteil (K) mit dem Preßkolben (3) verbindbar ist.

6. Vorrichtung nach Anspruch 5, **dadurch gekennzeichnet, daß** der Stellantrieb (5) mittels einer lösbaren Halterung (17) am Deckelteil (14) fixierbar ist.

7. Vorrichtung nach einem der Ansprüche 1 bis 6, **dadurch gekennzeichnet, daß** der mit dem Elektromotor (8) sowie dem Getriebeteil (26) verbundene Elektrozylinder (25), ein Lüfter (28) und ein Steuertrafo (27) in das weitgehend geschlossene Gehäuseteil (9) integrierbar sind.

8. Vorrichtung nach einem der Ansprüche 1 bis 7, **dadurch gekennzeichnet, daß** das mit dem Vorratsbehälter (2) verbindbare Aufnahmeteil (4) als eine Aufnahmehülse ausgebildet ist, die einerseits im Bereich des Preßkolbens (3) lösbar mit dem Gehäuse (9) verbunden ist und andererseits eine den Vorratsbehälter (2) lösbar erfassende Verbindungskontur aufweist.

9. Vorrichtung nach einem der Ansprüche 1 bis 8, **dadurch gekennzeichnet, daß** im Bereich des Elektrozylinders (25) jeweilige zur Steuerung des Hubweges (H) wirksame Endlagensensoren (29, 30) vorgesehen sind und in deren Nahbereich das Gehäuse (9) jeweilige dieses stabilisierende Wandteile (18", 38) aufweist.

10. Vorrichtung nach einem der Ansprüche 1 bis 9, **dadurch gekennzeichnet, daß** im Bereich des den Vorratsbehälter (2) mit rohrförmiger Kontur umfassenden Aufnahmeteils (4) ein mit dem Stellantrieb (5) des Preßkolbens (3) zusammenwirkender und dessen jeweilige Verlagerung (H) auslösender Signalgeber (31) vorgesehen ist, derart, daß mittels eines den Vorratsbehälter (2) im Aufnahmeteil (4) fixierenden Haltestiftes (35) eine berührungslose Signalauslösung durchführbar ist.

11. Vorrichtung nach Anspruch 10, **dadurch gekennzeichnet, daß** als Signalgeber (31) ein Näherungsschalter (34) vorgesehen ist.

12. Vorrichtung nach einem der Ansprüche 1 bis 11, **dadurch gekennzeichnet, daß** dem Preßkolben (3) mittels des stufenlos regelbaren Stellantriebes (5) unterschiedliche Preßgeschwindigkeiten vorgebbar sind.

13. Vorrichtung nach einem der Ansprüche 1 bis 12, **dadurch gekennzeichnet, daß** die Wandungen (12, 13, 14) des Gehäuseteils (9) zumindest bereichsweise mit Lüftungsöffnungen (36) versehen sind.

14. Vorrichtung nach einem der Ansprüche 1 bis 13, **dadurch gekennzeichnet, daß** mit den durch Abkantung von Edelstahlblech-Teilen geformten Wandteilen (12, 13, 18; 18', 18", 18"') ein im wesentlichen einstückiges Gehäuseteil (9) gebildet und dieses zumindest im Funktionsbereich des Preßkolbens (3) weitgehend spaltfrei ist.

15. Vorrichtung nach einem der Ansprüche 1 bis 14, **dadurch gekennzeichnet, daß** das hülsenförmige Aufnahmeteil (4) am Gehäuseteil (9) mittels einer Schraub- und/oder Klemmverbindung (11') festlegbar ist.

16. Vorrichtung nach Anspruch 15, **dadurch gekennzeichnet, daß** das Aufnahmeteil (4) mittels der Schraubverbindung direkt am Gehäuseteil (9) gehalten ist.

17. Vorrichtung nach Anspruch 15, **dadurch gekennzeichnet, daß** das Aufnahmeteil (4) mittels einer dieses am oberen Ende erfassenden Klemmschraube (41) zwischen zwei Wandteilen (39, 40) des Gehäuses (9) gehalten ist.

18. Vorrichtung nach einem der Ansprüche 15 bis 17, **dadurch gekennzeichnet, daß** das Aufnahmeteil (4) am oberen Ende einen Profilansatz (P) aufweist, der mit einem gehäuseseitig gehaltenen Gegenprofil (42) verbindbar ist.

19. Vorrichtung nach Anspruch 18, **dadurch gekennzeichnet, daß** die Verbindung (11') nach Art eines Bajonett-Verschlusses ineinandergreifende und durch eine Schwenkbewegung (Pfeil D) verrastbare Profile aufweist.

20. Vorrichtung nach Anspruch 18 oder 19, **dadurch gekennzeichnet, daß** das Aufnahmeteil (4) mit einem ringförmigen Profilansatz (46) verschweißt ist und das Gegenprofil (42) als eine Tragplatte (37') mit profilierter Durchlaßöffnung (43) ausgebildet ist.

21. Vorrichtung nach Anspruch 20, **dadurch gekennzeichnet, daß** die mit dem Aufnahmeteil (4) verbindbare Tragplatte (37) ihrerseits an einer gehäuseseitig gehaltenen Tragplatte (37") festlegbar ist.

22. Vorrichtung nach einem der Ansprüche 18 bis 21, **dadurch gekennzeichnet, daß** das in die Tragplatte (37') eingerastete Aufnahmeteil (4) durch eine zusätzliche Klemmschraube (41') gesichert ist.

## Claims

1. Device for dispensing ice cream, in particular in the form of spaghetti ice cream, which is provided with a pressure-applying piston (3) able to be displaced in a pot-like supply container (2), in such a way that the ice cream which is situated in the supply container (2), which latter is held on the housing sub-assembly (9), can be pressed out through respective openings (6) in the floor (7) of the container by the pressure-applying piston (3), which has an electric-motor-driven actuator (5), and can be transferred to a serving container situated below the floor (7) of the container, **characterised in that** what is provided as an actuator (5) is a standard sub-assembly in the form of an electric cylinder (25) having an electric motor (8), a gearbox section (26) and a stroke-performing part (K) able to be connected to the pressure-applying piston (3), and the electric cylinder (25) is supported in a housing sub-assembly (9) which has only stainless steel sheets as parts (12, 13, 18) of its wall, in such a way that the external functional region (F) of the housing sub-assembly (9) is formed largely without any gaps, at least close to the pressure-applying piston (3), and a hygienically safe unit structure (B) is thus formed.

2. Device according to claim 1, **characterised in that** at least in the region of the actuator (5), of the displaceable pressure-applying piston (3), of the supply container (2) and of a receiving part (4) which supports the latter when pressure is applied to the ice cream, the unit structure (B) forms respective removable assemblies.

3. Device according to claim 1 or 2, **characterised in that** the functional and supporting parts of the unit structure (B) are built into the parts (12, 13, 18, 18') of the wall in such a way that a largely continuous outer envelope is formed which is intrinsically strong.

4. Device according to one of claims 1 to 3, **characterised in that** the housing sub-assembly (9) of the unit structure (B) has a base part (15) in the form of a drip tray (16) made of stainless steel sheet which is supported on a supporting surface.

5. Device according to one of claims 1 to 4, **characterised in that** the actuator (5) having the electric cylinder (25) is on the one hand held on an upper cover portion (14) of the housing (9) and on the other hand a stroke-performing part (K) which passes through the wall (37) can be connected to the pressure-applying piston (3).

6. Device according to claim 5, **characterised in that** the actuator (5) can be fixed to the cover portion (14) by means of a releasable mounting (17).

7. Device according to one of claims 1 to 6, **characterised in that** the electric cylinder (25) which is connected to the electric motor (8) and the gearbox section (26), a fan (28) and a control-power transformer (27) can be built into the largely continuous housing sub-assembly (9).

8. Device according to one of claims 1 to 7, **characterised in that** the receiving part (4) which can be connected to the supply container (2) takes the form of a receiving sleeve which on the one hand is releasably connected to the housing (9) in the region of the pressure-applying piston (3) and on the other hand has an outline surface for connection which releasably grips the supply container (2).

9. Device according to one of claims 1 to 8, **characterised in that** respective limit sensors (29, 30) which act to control the stroke (H) are provided in the region of the electric cylinder (25), and in the region close to the limit sensors (29, 30) the housing (9) has respective parts (18", 38) of its wall which strengthen it.

10. Device according to one of claims 1 to 9, **characterised in that**, in the region of the receiving part (4) which encloses the supply container (2) of tubular outline shape, a signal emitter (31) which co-operates with the actuator (5) of the pressure-applying piston (3) and which triggers the displacement (H) of the latter at the time is provided, in such a way that non-contacting triggering of a signal can be effected by means of a retaining pin (35) which fixes the supply container (2) in the receiving part (4).

11. Device according to claim 10, **characterised in that** what is provided as the signal emitter (31) is a proximity switch (34).

12. Device according to one of claims 1 to 11, **characterised in that** different speeds of application of pressure can be set for the pressure-applying piston (3) by means of the actuator (5), which is steplessly adjustable.

13. Device according to one of claims 1 to 12, **characterised in that** at least a region or regions of the walls (12, 13, 14) of the housing sub-assembly (9) are provided with ventilation openings (36).

14. Device according to one of claims 1 to 13, **characterised in that** the parts (12, 13, 18, 18', 18", 18"') of the wall, which are formed by folding parts made of stainless steel sheet, form a substantially one-piece housing sub-assembly (9) and the latter is largely free of gaps at least in the region where the pressure-applying piston (3) operates.

15. Device according to one of claims 1 to 14, **characterised in that** the sleeve-like receiving part (4) can be fixed to the housing sub-assembly (9) by means of a screwed and/or clamped connection (11').

16. Device according to claim 15, **characterised in that** the receiving part (4) is held directly on the housing sub-assembly (9) by means of the screwed connection.

17. Device according to claim 15, **characterised in that** the receiving part (4) is held between two parts (39, 40) of the wall of the housing (9) by means of a clamping screw (41) which grips the receiving part (4) at the top end.

18. Device according to one of claims 15 to 17, **characterised in that** the receiving part (4) has, at the top end, a projecting profile (P) which can be connected to a mating profile (42) which is held on the housing.

19. Device according to claim 18, **characterised in that** the connection (11') has profiles which interengage and which can be locked by a pivoting movement (arrow D) after the fashion of a bayonet joint.

20. Device according to claim 18 or 19, **characterised in that** the receiving part (4) is welded to an annular projecting profile (46) and the mating profile (42) takes the form of a supporting plate (37') having a profiled through-opening (43).

21. Device according to claim 20, **characterised in that** the supporting plate (37'), which can be connected to the receiving part (4), can in turn be fixed to a supporting plate (37") which is held on the housing.

22. Device according to one of claims 18 to 21, **characterised in that**, when latched into the supporting plate (37'), the receiving part (4) can be secured in position by an additional clamping screw (41').

## Revendications

1. Dispositif destiné à distribuer de la crème glacée, en particulier sous la forme de glace spaghetti, qui est pourvu d'un piston presseur (3) pouvant être déplacé dans un réservoir (2) en forme de pot de telle sorte qu'avec le piston presseur (3) présentant un servo-entraînement à moteur électrique (5), la crème glacée se trouvant dans le réservoir (2) maintenu sur l'élément de boîtier (9) peut être pressée par des ouvertures (6) respectives dans le fond de réservoir (7) et remise à un récipient de service se trouvant sous celui-ci, **caractérisé en ce que** comme servo-entraînement (5) est prévu un ensemble standard en forme de cylindre électrique (25) présentant un moteur électrique (8), un élément de transmission (26) et un élément de translation (K) pouvant être relié au piston presseur (3) et celui-ci est en appui dans un élément de boîtier (9) ne présentant que des tôles d'acier spécial comme éléments de paroi (12, 13, 18) de telle sorte que sa zone fonctionnelle (F) extérieure soit formée au moins près du piston presseur (3) essentiellement sans fente et ainsi, une unité de construction (B) plus hygiénique soit constituée.

2. Dispositif selon la revendication 1, **caractérisé en ce que** l'unité de construction (B) forme au moins dans la zone du servo-entraînement (5), du piston presseur (3) pouvant être déplacé, du réservoir (2) et d'un élément de réception (4) appuyant celui-ci lors du pressage de la glace, un ensemble respectif pouvant être démonté.

3. Dispositif selon la revendication 1 ou 2, **caractérisé en ce que** les éléments fonctionnels et d'appui de l'unité de construction (B) sont intégrés dans les éléments de paroi (12, 13, 18, 18') de sorte qu'un contour d'enveloppe largement fermé et stable en soi soit formé.

4. Dispositif selon l'une quelconque des revendications 1 à 3, **caractérisé en ce que** l'élément de boîtier (9) de l'unité de construction (B) présente un élément de fond (15) appuyant celle-ci sur une base en forme de bac collecteur (16) en tôle d'acier spécial.

5. Dispositif selon l'une quelconque des revendications 1 à 4, **caractérisé en ce que** le servo-entraînement (5) avec le cylindre électrique (25) est maintenu d'une part sur un élément de couvercle (14) supérieur du boîtier (9) et d'autre part, un élément de translation (K) traversant la paroi (37) peut être relié au piston presseur (3).

6. Dispositif selon la revendication 5, **caractérisé en ce que** le servo-entraînement (5) peut être fixé au moyen d'un support (17) amovible sur l'élément de couvercle (14).

7. Dispositif selon l'une quelconque des revendications 1 à 6, **caractérisé en ce que** le cylindre électrique (25) relié au moteur électrique (8) ainsi qu'à l'élément de transmission (26), une soufflante (28) et un transformateur de commande (27) peuvent être intégrés dans l'élément de boîtier (9) largement fermé.

8. Dispositif selon l'une quelconque des revendications 1 à 7, **caractérisé en ce que** l'élément de réception (4) pouvant être relié au réservoir (2) est réalisé comme une douille de réception qui est reliée d'une part dans la zone du piston presseur (3) de manière amovible au boîtier (9) et présente d'autre part un contour de liaison englobant de manière amovible le réservoir (2).

9. Dispositif selon l'une quelconque des revendications 1 à 8, **caractérisé en ce que** dans la zone du cylindre électrique (25) sont prévus des capteurs de fin de course (29, 30) respectifs, actifs pour la commande de la course de levage (H) et dans leur zone proche, le boîtier (9) présente des éléments de paroi respectifs (18", 38) le stabilisant.

10. Dispositif selon l'une quelconque des revendications 1 à 9, **caractérisé en ce que** dans la zone de l'élément de réception (4) comportant le réservoir (2) doté d'un contour tubulaire est prévu un émetteur de signaux (31) coopérant avec le servo-entraînement (5) du piston presseur (3) et déclenchant son déplacement (H) respectif de telle sorte qu'au moyen d'une goupille de serrage (35) fixant le réservoir (2) dans l'élément de réception (4), un déclenchement de signal sans contact puisse être réalisé.

11. Dispositif selon la revendication 10, **caractérisé en ce qu'**un détecteur de proximité (34) est prévu comme émetteur de signaux (31).

12. Dispositif selon l'une quelconque des revendications 1 à 11, **caractérisé en ce que** différentes vitesses de pressage peuvent être prescrites au piston presseur (3) au moyen du servo-entraînement (5) réglable en continu.

13. Dispositif selon l'une quelconque des revendications 1 à 12, **caractérisé en ce que** les parois (12, 13, 14) de l'élément de boîtier (9) sont pourvues au moins par endroits d'ouvertures d'aération (36).

14. Dispositif selon l'une quelconque des revendications 1 à 13, **caractérisé en ce qu'**un élément de boîtier (9) essentiellement d'un seul tenant est formé avec les éléments de paroi (12, 13, 18 ; 18' ; 18" ; 18''') formés par repliage des pièces en tôle d'acier spécial et celui-ci est largement exempt de fente au moins dans la zone fonctionnelle du piston presseur (3).

15. Dispositif selon l'une quelconque des revendications 1 à 14, **caractérisé en ce que** l'élément de réception (4) en forme de douille peut être fixé sur l'élément de boîtier (9) au moyen d'une liaison par vis et/ou par serrage (11').

16. Dispositif selon la revendication 15, **caractérisé en ce que** l'élément de réception (4) est maintenu au moyen de la liaison par vis directement sur l'élément de boîtier (9).

17. Dispositif selon la revendication 15, **caractérisé en ce que** l'élément de réception (4) est maintenu au moyen d'une vis de serrage (41) le saisissant sur l'extrémité supérieure entre deux éléments de paroi (39, 40) du boîtier (9).

18. Dispositif selon l'une quelconque des revendications 15 à 17, **caractérisé en ce que** l'élément de réception (4) présente sur l'extrémité supérieure une saillie profilée (P) qui peut être reliée à un profilé antagoniste (42) maintenu côté boîtier.

19. Dispositif selon la revendication 18, **caractérisé en ce que** la liaison (11') présente des profilés s'engageant l'un dans l'autre comme une fermeture à baïonnette et pouvant être encliquetés par un mouvement de pivotement (flèche D).

20. Dispositif selon la revendication 18 ou 19, **caractérisé en ce que** l'élément de réception (4) est soudé à une saillie profilée (46) annulaire et le profilé antagoniste (42) est réalisé comme une plaque porteuse (37') avec une ouverture de passage (43) profilée.

21. Dispositif selon la revendication 20, **caractérisé en ce que** la plaque porteuse (37') pouvant être reliée à l'élément de réception (4) peut être fixée de son côté sur une plaque porteuse (37") maintenue côté boîtier.

22. Dispositif selon l'une quelconque des revendications 18 à 21, **caractérisé en ce que** l'élément de réception (4) encliqueté dans la plaque porteuse (37') est bloqué par une vis de serrage (41') supplémentaire.
